# EUROPEAN PATENT SPECIFICATION

(11) **EP 2 219 367 B1**
(45) Date of publication and mention of the grant of the patent: **21.12.2011**
(21) Application number: 09152957.8
(22) Date of filing: 16.02.2009
(51) Int. Cl.: H04N 5/232

(54) **Using gravity to direct a rotatable camera in a mobile device**
Verwendung von Schwerkraft zur Ausrichtung einer drehbaren Kamera in einem Mobilgerät
Utilisant la gravité pour diriger une camera pivotable dans un appareil mobile

(43) Date of publication of application: 18.08.2010
(73) Proprietor: RESEARCH IN MOTION LIMITED, Waterloo, Ontario N2L 3W8 (CA)
(72) Inventor: Song, Jae Ryee, Kanata Ontario K2W 0C2 (CA)
(74) Representative: Moore, Barry

(56) References cited:
- EP-A- 1 220 143
- JP-A- 2002 050 978
- JP-A- 2007 027 950
- US-A1- 2006 177 103
- US-B1- 6 535 114
- Stephanie Boozerand, Dave Etchells: "Nikon Coolpix S4 Overview", , 11 March 2005 (2005-03-11), Retrieved from the Internet: URL:http://www.imaging-resource.com/PRODS/ CPS4/CPS4A.HTM [retrieved on 2010-10-25]

## Description

It is not uncommon for people using handheld electronic devices to become so engrossed in applications running on the handheld electronic devices that their visual awareness of their surroundings is diminished, at least momentarily. Tasks that demand the user's attention and concentration include, for example, reading or composing a message, viewing a movie displayed on a handheld media player, engaging in a video telephone call, browsing the Internet, and playing a game on a handheld gaming device. The diminished visual awareness of the surroundings may be potentially dangerous to the user and to other people in the vicinity of the user.

JP2007027950 discloses a phone that includes a hinge region which is rotatable by a motor. The phone also includes an infrared detector to detect direction of heat from a human body and a control unit to operate the motor to turn the camera in the direction of the heat. The rotatable camera is used for crime prevention. In response to a user pressing a crime prevention key, the camera captures an image in one direction and is then rotated by the motor to the opposite direction and captures a second image. In addition, the infrared sensor may detect the direction of a human body and the lens of the camera may turn to that direction.

US2006/0177103 discloses a method for determining a description of motion of a moving mobile camera to determine a user input to an application. The method involves capturing a series of images from a moving mobile camera and comparing stationary features present in the-series of images. Optical flow analysis is performed on the series of images to determine a description of motion of the moving mobile camera. Based on the determined motion, a user input to an application is determined and the application responds to the user input, for example, by updating a user interface of the application.

US20040119836 discloses an apparatus and a method for correction of a deviation of an imaging sensor of a digital camera. The deviation of the imaging sensor from a reference position is caused by a slight oscillation of the human hand in taking a photograph using the digital camera. Suppose that the imaging sensor is rotated by a rotation angle "θ" with respect to the optical axis of the camera lens due to a slight oscillation of the operator. The rotation angle "θ" is very small. A target vector is calculated, the target vector describing a magnitude and a direction of an inverse movement of the imaging sensor needed to reach a reference position and cancel the deviation. The calculation of the target vector and the movement of the imaging sensor are executed within an image acquisition time for a single frame of the image signal.

JP2008116836 discloses an imaging apparatus for correcting a camera shake. Shake amount detecting sections of the imaging apparatus detect a relative change in a photographing optical system and main body section, caused by the movement of the photographing optical system based on an operation command. Target value calculating sections mix the detection outputs of shake amount detecting sections in respective directions, in proportions based on the output of the shake quantity detecting section, thereby calculating a target turning value for a photographing optical system. The shake drive sections turn a photographing optical system on the basis of the target rotation value.

JP2008276636 discloses performing various operations using an input device, regardless of the number of operation buttons. Functionality assigned to buttons of a game controller is changed according to the spatial orientation of the game controller.

A Cardan's suspension is an arrangement of rings in which a heavy body is mounted so that the body is fixed at one point; generally used in a gyroscope.

The Nicon Coolpix cameras feature a swivel lens design that allows a user to point the lens manually in almost any direction without losing the LCD monitor view. A photographer is thus given the ability to take pictures from a wide range of angles, even from overhead.

### GENERAL

A camera module may be physically coupled to the housing of a handheld electronic device. An image sensor able to sense an image in a field of view that is centered around a line of sight may be embedded in the camera module. The line of sight may be perpendicular to a rotation axis of the camera module. A motor in the handheld electronic device may be controllable by a processor of the handheld electronic device to adjust an angle of rotation of the camera module, and hence the line of sight, about the rotation axis. An image sensed by the image sensor may be displayed in a display of the handheld device.

The handheld electronic device may comprise a tilt sensor to sense an orientation of the housing relative to a direction of gravity. The motor may be controlled to rotate the camera module, and hence the line of sight, about the rotation axis to achieve a particular angle between the line of sight and the direction of gravity. The motor may be further controlled to rotate the camera module, and hence the line of sight, about the rotation axis as the orientation changes to maintain the particular angle between the line of sight and the direction of gravity. The particular angle may be preprogrammed to memory or may be set as a function of input received at a user-input element of the device.

Image processing may be employed to process the image sensed by the image sensor. One or more events may be detected as a result of the image processing. For example, the event may be appearance of an object or an obstacle or the detection of motion in the field of view. An audible effect or visual effect or tactile effect or any combination of such effects may be produced in response to detecting one or more events, in order to alert a user of the device to the detected event.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

FIGS. 1, 2-1 and 2-2 are simplified schematic illustrations of a person, holding and using a handheld electronic device having a rotatable image sensor;

FIG. 3 is a simplified flowchart of a method in a handheld electronic device;

FIGS. 4-1, 4-2 and 4-3 are simplified illustrations of different display modes for images from the image sensor;

FIG. 5 is a simplified front view illustration of an exemplary handheld electronic device having a rotatable image sensor;

FIG. 6 is a simplified side view illustration of the handheld electronic device of FIG. 5 along a section A to A';

FIG. 7 is a simplified block diagram of an exemplary handheld electronic device;

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

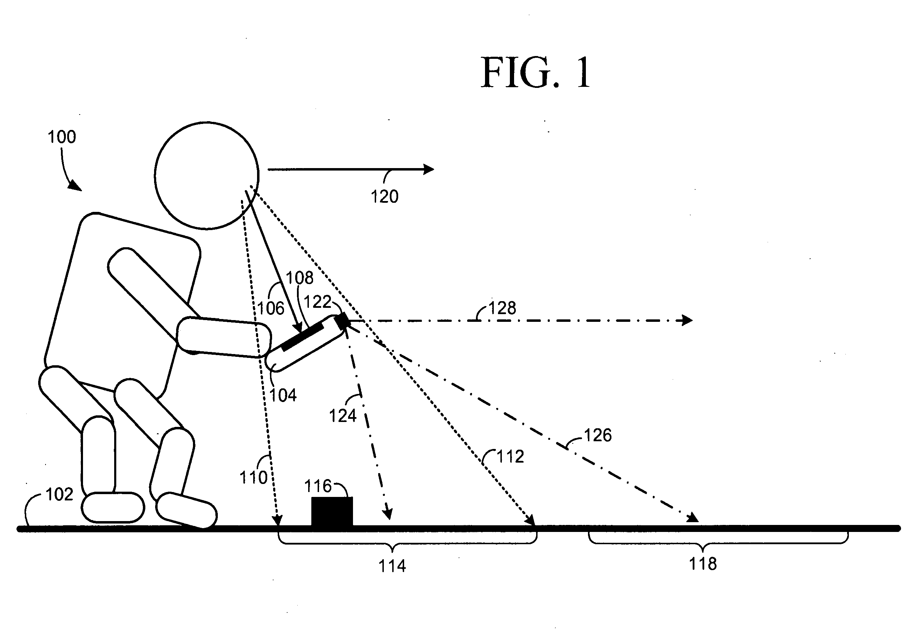

Reference is made to Figure 1, which is a simplified schematic illustration of a person 100, the "user", on a terrain 102, holding and using a handheld electronic device 104. A non-exhaustive list of examples for handheld electronic device 104 includes a personal digital assistant (PDA), a mobile phone, a pager, a handheld gaming device, a handheld media player, a handheld camera, a smartphone, an electronic mail client, an instant messaging client, and the like.

While the user's attention and concentration are directed toward a display 108 of device 104, this defines a user's line of sight 106 that is also directed toward display 108. Peripheral vision is the ability to see objects and movement outside of the direct line of vision, and this ability varies from person to person due to factors such as age, training and eye health. Arrows 110 and 112 illustrate the limits of the user's peripheral vision while the direct line of vision is user's line of sight 106, and correspond to a portion 114 of terrain 102. The length of portion 114 and its distance from the user are related to the angle of user's line of sight 106. In many cases, user's line of sight 106 is such that portion 114 is only a few meters in length and is very close to the user.

While the user is looking at device 104 along user's line of sight 106, most of portion 114 is obscured by device 104. Moreover, since the user's attention is directed toward device 104, the user may not fully comprehend what he or she sees in his or her peripheral vision. Consequently, if the user is walking, he or she may encounter an obstacle 116 that is located in or on portion 114 and is obscured by device 104. Although obstacle 116 is illustrated as an object, in other examples obstacle 116 may be stairs, a hole, an animal or person, uneven terrain, or any other obstacle.

The technology described herein may provide a user with enhanced visual awareness of his or her surroundings while the user's vision is directed to a display of a handheld electronic device. The enhanced visual awareness may relate to surroundings that would be within the user's peripheral vision if not obscured by the handheld electronic device. For example, the technology may provide the user with enhanced visual awareness of parts of portion 114 that are obscured by device 104. The enhanced visual awareness may relate to surroundings that would not be within the user's peripheral vision. For example, the technology may provide the user with visual awareness of a portion 118 of terrain 102 that is further away from him or her than portion 114. In another example, the technology may provide the user with visual awareness of what is in front of him or her, as indicated by an arrow 120.

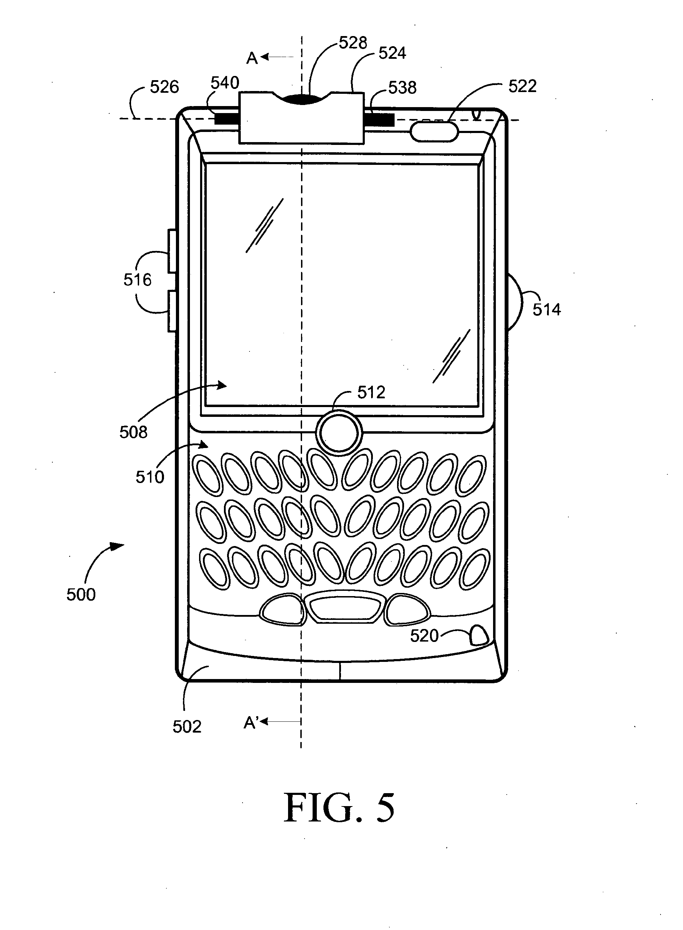

As will be described in more detail with respect to Figure 5, device 104 includes a camera module that is physically coupled to the housing of device 104, and an image sensor 122 is embedded in the camera module. Image sensor 122 is able to sense images in its field of view. The approximate center of the field of view is the image sensor's line of sight, which should not be confused with the user's line of sight 106. Images sensed by image sensor 122 may be displayed on display 108. A non-exhaustive list of examples for image sensor 122 includes a charge-coupled device (CCD) sensor, a complementary metal-oxide-semiconductor (CMOS) sensor, and any other suitable image sensor. Device 104 also comprises a motor (not shown), with which device 104 can control the rotation of the camera module (and hence the rotation of image sensor 122) about a rotation axis that is perpendicular to the image sensor's line of sight. Consequently, device 104 can change the line of sight of image sensor 122 "up" and "down" relative to the angle at which device 104 is held by the user.

Three exemplary directions 124, 126 and 128 for the line of sight of image sensor 122 are illustrated in Figure 1: a substantially "down" direction 124, a substantially "down and forward" direction 126, and a substantially "forward" direction 128. While pointing in direction 124, image sensor 122 may provide a view of portion 114. While pointing in direction 126, image sensor 122 may provide a view of farther portion 118. While pointing in direction 128, image sensor 122 provides a view in the direction of arrow 120. The line of sight of image sensor 122 may be controlled by device 104 in other directions not explicitly illustrated in Figure 1. Displaying the images sensed by image sensor 122 on display 108 may enhance the visual awareness of the surroundings of the user using device 104.

The user may be able to control the rotation of the camera module (and hence the rotation of image sensor 122) using any suitable user-input element of device 104, for example, by rotating a trackball or a wheel, by pressing buttons, by pressing keys of a keyboard, by providing voice commands, by touching a touch screen or by sliding a finger on the touch screen. As discussed below, a processor executing executable code stored on device 104 can control the motor to adjust the rotation of the camera module as a function of input received at the user-input element caused by the user's manipulation of the user-input element.

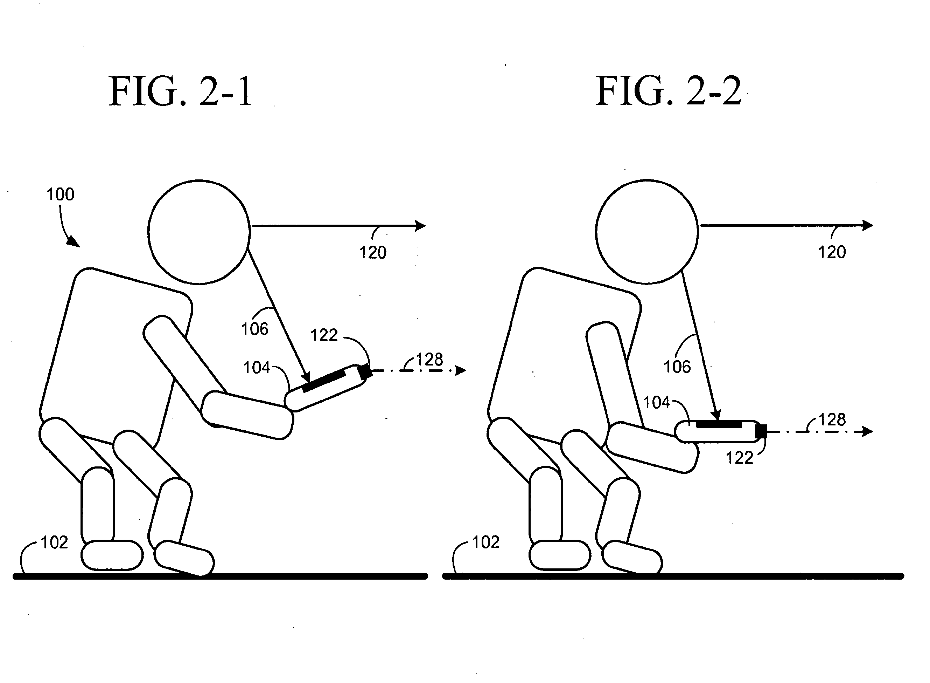

Reference is made to Figures 2-1 and 2-2, which illustrate device 104 being held by the user in different positions than the position in which it is held by the user in Figure 1. The technology described herein may enable device 104 to control the line of sight of image sensor 122 to be in a desired direction, regardless of the position of device 104. In Figures 2-1 and 2-2, the line of sight points in substantially "forward" direction 128 to provide a view in the direction of arrow 120. However, other directions for the line of sight of image sensor 122 are also contemplated.

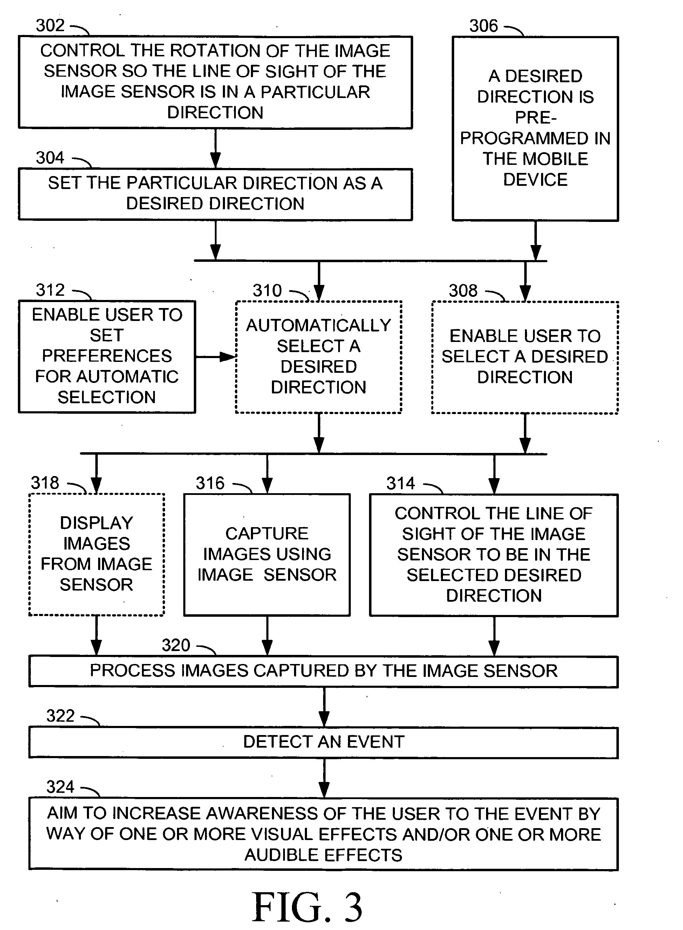

In order to keep the line of sight of image sensor 122 in a desired direction, device 104 may include a control mechanism, and may use the direction of gravity as a reference for this control mechanism. Reference is made additionally to Figure 3, which is a simplified flowchart of a method in a handheld device. As shown in Figure 3, one or more desired directions may be recorded in device 104 to indicate the angles between one or more desired directions and the direction of gravity.

Device 104 may enable the user to set one or more desired directions using any suitable user-input element of device 104. At 302, device 104 may enable the user to first control the rotation of image sensor 122 so the line of sight of image sensor 122 is in a particular direction, as explained hereinabove. Subsequently, at 304, device 104 may enable the user to use a suitable user-input element of device 104 to set the particular direction as a desired direction, for example, by pressing a trackball, a wheel, a button or a key, by providing voice commands or by touching a touch screen. Alternatively, or additionally, as shown at 306, one or more desired directions may be preprogrammed in device 104, for example, during manufacturing or with a downloadable software update downloaded to device 104.

If two or more desired directions are available in device 104 (set by the user or preprogrammed or both), device 104 may enable the user to select which desired direction to use, as shown in 308, for example via a graphical user interface displayed on display 108.

Alternatively, as shown in 310, device 104 may be able to automatically select between desired directions according to predefined criteria. For example, device 104 may select a substantially "down" direction if device 104 senses that it is stationary, and device 104 may select a substantially "forward" direction if device 104 senses that it is not stationary. In another example, device 104 may select a substantially "forward" direction if device 104 senses that it is stationary, and device 104 may select a substantially "down" direction if device 104 senses that it is not stationary. As shown in 312, device 104 may enable the user to define the way in which device 104 is to select between desired directions according to the user's individual preferences, for example, via a graphical user interface displayed on display 108. As shown in 314, device 104 may aim to control the line of sight of image sensor 122 to be in the selected desired direction, and may operate image sensor 122 to capture images, as shown in 316.

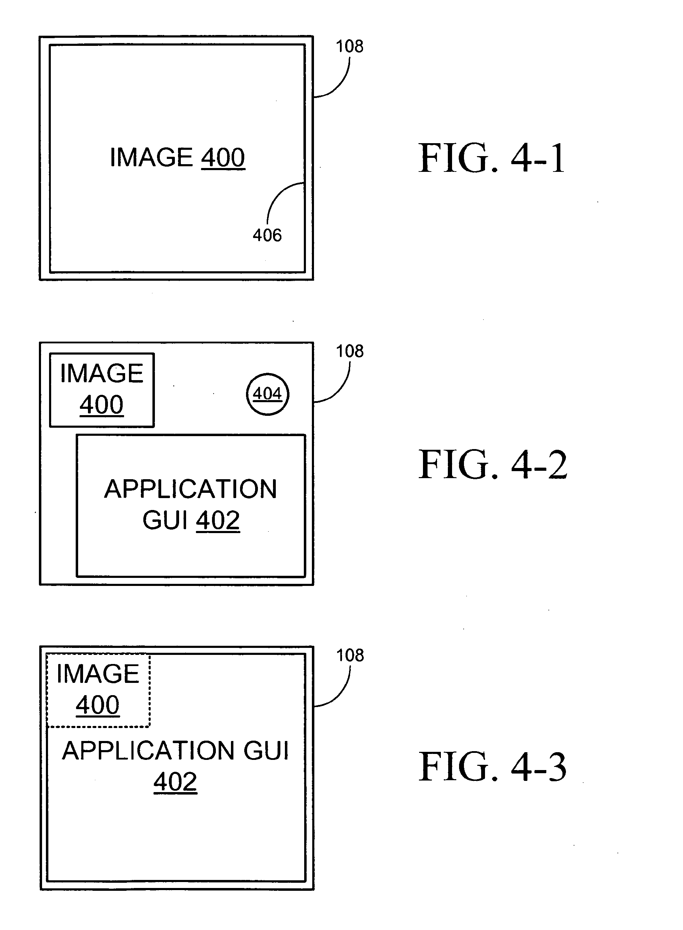

Device 104 may optionally display images captured by image sensor 122 on display 108, as shown in 318. This display of images may be accomplished in many different ways. Three examples are illustrated in Figures 4-1, 4-2 and 4-3, respectively, and are now discussed briefly.

Figure 4-1 illustrates an exemplary "full screen" display mode in which an image 400 from image sensor 122 occupies most or all of display 108.

Figure 4-2 illustrates a "small window" display mode, applicable when the user is operating an application running on device 104 that has a graphical user interface (GUI) 402. In this display mode, image 400 from image sensor 122 occupies a smaller area of display 108 than the area occupied by the graphical user interface 402 of the application.

Figure 4-3 illustrates a "picture in picture" display mode, applicable when the user is operating an application running on device 104 that has GUI 402. In this display mode, image 400 from image sensor 122 is displayed in "picture in picture" fashion, so that it obscures a portion of the area occupied by GUI 402 on display 108. Although image 400 is shown in Figure 4-3 in the top left corner of display 108, device 104 may place image 400 in a different portion of display 108 so as to minimize interference with the operation of the application having GUI 402. For example, if GUI 402 includes an area designated for data entry and the application is awaiting input from the user, device 104 may assess whether image 400 obscures the area designated for data entry and may place image 400 in different portion of display 108 so as not to obscure or to obscure less of the area designated for data entry.

The user may be able to select a display mode or to switch between different display modes using any suitable user-input element of device 104, such as, for example, a trackball, a wheel, a button, a key, an audio input element or a touch screen.

Returning to Figure 3, device 104 may incorporate image processing technology and as shown at 320, device 104 may use this image processing technology to process images captured by image sensor 122. Using the image processing technology, device 104 may be able to detect events that appear in images captured by image sensor 122. Such events may be, for example, appearance of an object, detection of motion of an object, detection of an obstacle and so forth.

At 322, device 104 detects such an event, and at 324, device 104 aims to increase awareness of the user to the event by producing one or more visual effects or one or more audible effects or one or more tactile effects or any combination thereof.

A non-exhaustive list of examples of visual effects includes: displaying image 400 on display 108, if not yet displayed; displaying a visual alert on display 108, for example, a flickering image 404, shown in Figure 4-2, or by flashing an edge 406 of image 400; switching between display modes of image 400; or resizing image 400 on display 108. For example, device 104 may set the size of image 400 to a relatively large size if motion of an object is captured in image 400 or if a potential obstacle is captured in image 400 or both, and may set the size of image 400 to a relatively small size otherwise. Other suitable visual effects are also contemplated.

A non-exhaustive list of examples of audible effects includes sounding an audible alert via an audio output element of device 104. A non-exhaustive list of examples of tactile effects includes causing all or a part of device 104 to vibrate.

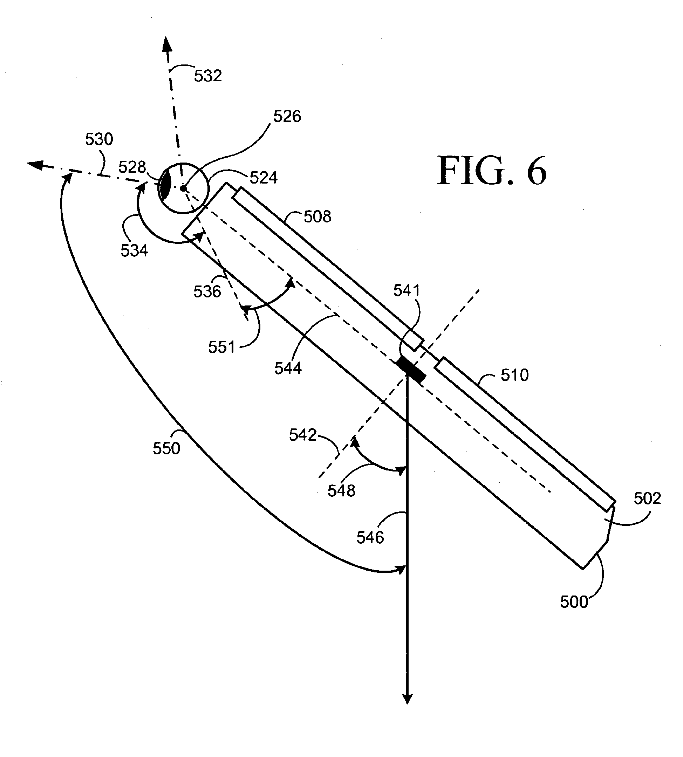

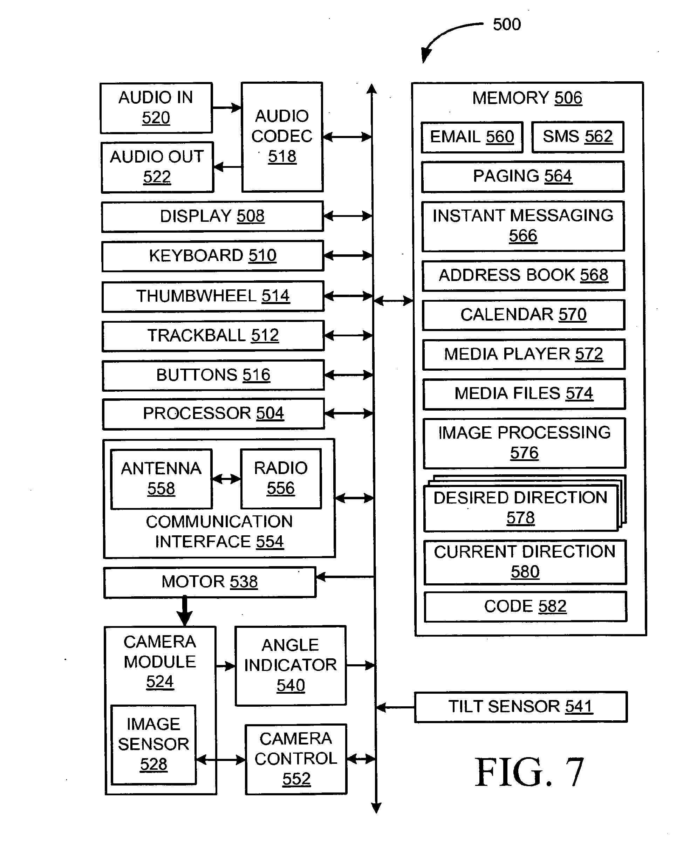

Reference is made now to Figures 5, 6 and 7. Figure 5 is a simplified front view illustration of an exemplary handheld electronic device 500, Figure 6 is a simplified side view illustration of device 500 along a section A - A', and Figure 7 is a simplified block diagram of device 500. For clarity, some components and features of device 500 are not shown in figures 5, 6 and 7 and are not described explicitly below. Device 500 is an example of device 104.

Device 500 has a housing 502 that encloses the different components of device 500. For simplicity, figures 5 and 6 show housing 502 as made of a single piece. However, housing 502 may be made of one, two or more pieces connected together. For example, a keyboard may slide in and out on a main part of the housing. In another example, housing 502 may have two or more sections that fold via a hinge.

Device 500 includes a processor 504 enclosed within housing 502. Device 500 also includes a memory 506, a display 508 and a keyboard 510, all coupled to processor 504. Keyboard 510 may be embedded in full or in part within display 508, i.e. display 508 may be a "touch screen". Device 500 may include one or more tactile user-input elements devices coupled to processor 504. A non-exhaustive list of examples for such tactile user-input elements includes a trackball 512 that is rollable and pressable, a wheel 514 that is rotatable and pressable, and buttons 516 that may have programmable functionality.

Device 500 may include an audio coder-decoder (codec) 518 coupled to processor 504. Device 500 may include an audio input element 520, for example a microphone, and an audio output element 522, for example, a speaker, both coupled to codec 518. Device 500 may include one or more connectors (not shown) to connect to an external audio input element or an external audio output element or both. The one or more connectors may be included in device 500 instead of, or in addition to, audio input element 520 or audio output element 522 or both. Device 500 may include additional user interface elements that are not shown in figures 5, 6 and 7.

Device 500 includes a camera module 524 that is physically coupled to housing 502 and is rotatable about a rotation axis 526. In a typical embodiment, camera module 524 can be partially embedded in housing 502, such that a portion of camera module 524 is set into housing 502. An image sensor 528, which corresponds generally to image sensor 122 in Figures 1 - 3, is embedded in camera module 524 and has a line of sight 530 that is perpendicular to rotation axis 526 at any rotational position of camera module 524 about rotation axis 526. Figure 6 shows camera module 524 in an exemplary rotational position in which image sensor 528 has a line of sight 530. A second exemplary line of sight 532 for another rotational position of camera module 524 is also shown in Figure 6. Section A - A' shown in Figure 5 is a plane defined by lines of sight 530 and . 532. Rotation of camera module 524 can be expressed by an angle 534 between line of sight 530 and an arbitrary reference axis 536 that is perpendicular to rotation axis 526.

Device 500 includes a motor 538 that is coupled to housing 502 and to camera module 524, and is controllable by processor 504 to manipulate angle 534. Device 500 includes an angle indicator 540, for example an encoder, which can sense angle 534 and report its value or a correlated value to processor 504. For example, absolute rotary encoders and incremental rotary encoders are commercially available. It may be noted that many different mechanical implementations are possible for elements 524, 528, 538 and 540. For clarity of the description, elements 524, 528, 538 and 540 are presented in figures 5 and 6 in a simplified manner that does not presume any particular mechanical implementation.

Device 500 includes a tilt sensor 541, for example, an accelerometer or a gyroscope. Tilt sensor 541 may be a Micro Electrical Mechanical System (MEMS) device. For example, Analog Devices, Inc. of Norwood, Massachusetts, USA produces a family of integrated MEMS accelerometers and a family of integrated MEMS gyroscopes. Tilt sensor 541 provides measurements in at least two perpendicular axes and is mounted in device 500 so that these two axes are parallel to the plane defined by lines of sight 530 and 532. As an example, Figure 6 shows two perpendicular axes 542 and 544 in which orientation sensor 542 provide measurements. For simplicity, axis 544 is shown parallel to an edge of housing 502 and intersecting with rotation axis 526, but this relationship between axis 544, housing 502 and rotation axis 526 is not an essential requirement.

Tilt sensor 541 is able to indicate a direction of gravity 546 relative to axis 542 and 544. The type of indication may vary according to the design of tilt sensor 541. In one non-limiting example, tilt sensor 541 may output a rectangular wave and may use pulse width modulation (PWM) to encode or convey information pertaining to an angle 548 between axis 542 and direction of gravity 546.

Processor 504 may calculate an angle 550 between the direction of gravity 546 and line of sight 530 from the following information: a) angle 548 corresponding to the orientation of housing 502 relative to the direction of gravity 546, b) an angle 551 between axis 544 and reference axis 536, and c) angle 534 corresponding to the rotation of camera module 524 about rotation axis 526 relative to reference axis 536.

Device 500 includes a camera control module 552 that operates image sensor 528 for capturing video images, still images, or both.

Device 500 may optionally include a wireless communication interface 554, compatible with a wireless communication standard, coupled to processor 504 and including at least a radio 556 and one or more antennae 558. By way of wireless communication interface 554 and a communication infrastructure (not shown) that is external to device 500, device 500 may be able to establish voice, video and/or data communication sessions with other devices (not shown). A non-exhaustive list of examples for data communication sessions includes sending and receiving electronic mail (email), instant messages, paging messages, short message service (SMS) messages, and any other suitable data communication sessions. For data communications supported by device 500, memory 506 may store respective software modules to be executed by processor 504, for example, an email software module 560, an SMS software module 562, a paging software module 564 and an instant messaging software module 566.

Memory 506 may store application modules, for example, an "address book" application module 568 to manage information related to individuals and organizations, a "calendar" application module 570 to manage information related to calendar events such as appointments and meetings, and a media player module 572. Memory 504 may store media files 574 including audio, video, and/or stills pictures information. Any of media files 574 may include information captured by image sensor 528. Media player 572 may be able to play media files 574 using display 508 or audio output element 522 or both, as appropriate.

Memory 506 may store an image processing module 576 able to detect motion and/or potential obstacles in images captured by image sensor 528. Memory 104 may store one or more desired directions 578 so to indicate the angles between a plurality of desired directions of the line of sight of image sensor 122 and the direction of gravity. Memory 104 may store an indication 580 of the direction of a current line of sight of image sensor 122 and the direction of gravity.

Memory 104 may store executable code 582 which, when executed by processor 504, causes device 500 to perform any of the methods described herein.

A non-exhaustive list of examples for standards with which wireless communication interface 544 may comply includes Direct Sequence - Code Division Multiple Access (DS-CDMA) cellular radiotelephone communication, Global System for Mobile Communications (GSM) cellular radiotelephone, North American Digital Cellular (NADC) cellular radiotelephone, Time Division Multiple Access (TDMA), Extended-TDMA (E-TDMA) cellular radiotelephone, wideband CDMA (WCDMA), General Packet Radio Service (GPRS), Enhanced Data for GSM Evolution (EDGE), 3G and 4G communication.

Alternatively, device 500 may be "802.11 -enable", and wireless communication interface 544 may comply with one or more standards of the 802.11 family of standards defined by the Institute of Electrical and Electronic Engineers (IEEE) for Wireless LAN MAC and Physical layer (PHY) specifications.

A non-exhaustive list of examples for processor 504 includes microprocessors, microcontrollers, central processing units (CPU), digital signal processors (DSP), reduced instruction set computers (RISC), complex instruction set computers (CISC) and the like. Furthermore, processor 502 may comprise more than one processing unit, may be part of an application specific integrated circuit (ASIC) or may be a part of an application specific standard product (ASSP).

A non-exhaustive list of examples for memory 506 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

A non-exhaustive list of examples for antennae 558 includes dipole antennae, monopole antennae, multilayer ceramic antennae, planar inverted-F antennae, loop antennae, shot antennae, dual antennae, omnidirectional antennae and any other suitable antennae.

The technology described herein may provide a user with enhanced visual awareness of his or her surroundings while the user's vision is directed to a display of a handheld electronic device. This enhanced visual awareness may enable the user to avoid hazards such as tripping over obstacles or falling down stairs. While certain features of the invention have been illustrated and described herein, many modifications, substitutions, changes, and equivalents will now occur to those of ordinary skill in the art. It is, therefore, to be understood that the appended claims are intended to cover all such modifications.

## Claims

1. A handheld electronic device (500) comprising:
a housing (502);
a processor (504) enclosed within the housing (502);
a camera module (524) physically coupled to the housing (502), wherein the camera module (524) is rotatable relative to the housing (502) about a rotation axis (526) of the camera module (524);
an image sensor (122, 528) embedded in the camera module (524) to sense an image in a field of view that is centered around a line of sight (124, 126, 128, 530, 532), wherein the line of sight is perpendicular to the rotation axis (526); and
a display (508) controlled by the processor (504) to display the image (400); a motor (538) coupled to the housing (502) and to the camera module (524), wherein the motor (538) is controllable by the processor (504) to rotate the camera module (524) and hence the line of sight (124, 126, 128, 530, 532) about the rotation axis (526) relative to the housing (502);
a tilt sensor (541) coupled to the processor (504) to sense an orientation (548) of the housing (502) relative to a direction of gravity (546);
an angle indicator (540) coupled to the processor (504) to detect an angle of rotation (534) of the camera module (524) and hence the line of sight (124, 126, 128, 530, 532) about the rotation axis (526) relative to a reference axis (536) that is perpendicular to the rotation axis (526); and
a memory (506) able to store executable code means (582) which, when executed by the processor (504), controls the motor (538) to rotate the camera module (524) and hence the line of sight (124, 126, 128, 530, 532) about the rotation axis (526) to achieve and to keep a particular angle (550) between the line of sight (124, 126, 128, 530, 532) and the direction of gravity (546), based on the information from the tilt sensor and the angle indicator.

2. The handheld electronic device (500) according to claim 1, wherein the executable code means (582), when executed by the processor (504), further controls the motor (538) to rotate the camera module (524) and hence the line of sight (124, 126, 128, 530, 532) about the rotation axis (526) as the orientation (548) changes to maintain the particular angle (550) between the line of sight (124, 126, 128, 530, 532) and the direction of gravity (546).

3. The handheld electronic device (500) according to claim 1 or claim 2, further comprising:
a user-input element (510, 512, 514, 516, 520) coupled to the processor (504),
wherein the executable code means (582), when executed by the processor (504), sets the particular angle (550) as a function of input received at the user-input element (510, 512, 514, 516, 520).

4. The handheld electronic device (500) according claim 1 or claim 2, wherein an indication of the particular angle (578) is preprogrammed to the memory (506).

5. The handheld electronic device (500) according to claim 1 or claim 2, further comprising:
a user-input element (510, 512, 514, 516, 520) coupled to the processor (504),
wherein the memory is able to store a plurality of indications of angles (578) between the line of sight (124, 126, 128, 530, 532) and the direction of gravity (546), and
wherein the executable code means (582), when executed by the processor (504), selects the particular angle (550) from the plurality as a function of input received at the user-input element (510, 512, 514, 516, 520).

6. The handheld electronic device (500) according to claim 1 or claim 2, wherein a plurality of indications of angles (578) between the line of sight (124, 126, 128, 530, 532) and the direction of gravity (546) are preprogrammed to the memory (506), and wherein the executable code means (582), when executed by the processor (504), selects the particular angle from the plurality according to predefined criteria.

7. A method performed in a handheld electronic device (500), the method comprising:
displaying in a display (508) of the handheld electronic device (500) an image (400) sensed by an image sensor (528) embedded in a camera module (524), wherein the image (400) is sensed in a field of view that is centered around a line of sight (124, 126, 128, 530, 532);
sensing an orientation (548) of a housing (502) of the handheld electronic device (500) relative to a direction of gravity (546), wherein the camera module (524) is physically coupled to the housing (502) and is rotatable relative to the housing (502) about a rotation axis (526) of the camera module (524);
detecting an angle of rotation (534), relative to a reference axis (536), of the camera module (524) and hence of the line of sight (124, 126, 128, 530, 532) about the rotation axis (526) of the camera module (524), wherein the line of sight (124, 126, 128, 530, 532) is perpendicular to the rotation axis (526); and
controlling a motor (538) of the handheld electronic device (500) to rotate the camera module (524) and hence the line of sight (124, 126, 128, 530, 532) about the rotation axis (526) to achieve and to keep a particular angle (550) between the line of sight (124, 126, 128, 530, 532) and the direction of gravity (546), based at least on the orientation of the housing relative to a direction of gravity and the angle of rotation of the camera module.

8. The method according to claim 7, further comprising:
controlling the motor (538) to rotate the camera module (524) and hence the line of sight (124, 126, 128, 530, 532) about the rotation axis (526) as the orientation (548) changes to maintain the particular angle (550) between the line of sight (124, 126, 128, 530, 532) and the direction of gravity (546).

9. The method according to claim 7 or claim 8, further comprising:
receiving input at a user-input element (510, 512, 514, 516, 520) of the handheld electronic device (500) and setting the particular angle (550) as a function of the input; or
preprogramming (578) the particular angle (550) to the handheld electronic device (500).

10. The method according to claim 7 or claim 8, further comprising:
storing a plurality of indications of angles (578) between the line of sight (124, 126, 128, 530, 532) and the direction of gravity (546) in the handheld electronic device (500); and
receiving input at a user-input element (510, 512, 514, 516, 520) of the handheld electronic device (500) and setting the particular angle (550) from the plurality according as a function of the input.

11. The method according to claim 7 or claim 8, further comprising:
preprogramming a plurality of indications of angles (578) between the line of sight (124, 126, 128, 530, 532) and the direction of gravity (546) to the handheld electronic device (500); and
selecting the particular angle (550) from the plurality according to predefined criteria.

12. A computer readable storage medium (506) comprising executable code means (582) embodied therein for execution by a processor (504) of a handheld electronic device (500), the executable code means (582) being executable for causing the handheld electronic device (500) to implement the steps of the method of any one of claims 7 to 11.

## Patentansprüche

1. Handgehaltene elektronische Vorrichtung (500), die aufweist:
ein Gehäuse (502);
einen Prozessor (504), der in dem Gehäuse (502) aufgenommen ist;
ein Kameramodul (524), das physikalisch mit dem Gehäuse (502) verbunden ist, wobei das Kameramodul (524) relativ zu dem Gehäuse (502) um eine Rotationsachse (526) des Kameramoduls (524) drehbar ist;
einen Bildsensor (122, 528), der in dem Kameramodul (524) eingebettet ist, um ein Bild in einem Sichtfeld zu erfassen, das um eine Sichtlinie (124, 126, 128, 530, 532) zentriert ist, wobei die Sichtlinie senkrecht zu der Rotationsachse (526) ist; und
eine Anzeige (508), die durch den Prozessor (504) gesteuert wird zur Anzeige des Bilds (400);
einen Motor (538), der mit dem Gehäuse (502) und mit dem Kameramodul (524) verbunden ist, wobei der Motor (538) durch den Prozessor (504) steuerbar ist, um das Kameramodul (524) und somit die Sichtlinie (124, 126, 128, 530, 532) um die Rotationsachse (526) relativ zu dem Gehäuse (502) zu rotieren;
einen Neigungssensor (541), der mit dem Prozessor (504) verbunden ist, um eine Ausrichtung (548) des Gehäuses (502) relativ zu einer Richtung der Schwerkraft (546) zu erfassen;
eine Winkelanzeige (540), die mit dem Prozessor (504) verbunden ist, um einen Rotationswinkel (534) des Kameramoduls (524) zu erfassen und somit die Sichtlinie (124, 126, 128, 530, 532) um die Rotationsachse (526) relativ zu einer Referenzachse (536), die senkrecht zu der Rotationsachse (526) ist; und
einen Speicher (506), der ein "ausführbarer Code"-Mittel (582) speichern kann, das bei Ausführung durch den Prozessor (504) den Motor (538) steuert, um das Kameramodul (524) und somit die Sichtlinie (124, 126, 128, 530, 532) um die Rotationsachse (526) zu rotieren, um einen bestimmten Winkel (550) zwischen der Sichtlinie (124, 126, 128, 530, 532) und der Richtung der Schwerkraft (546) zu erlangen und zu halten, basierend auf der Information von dem Neigungssensor und der Winkelanzeige.

2. Handgehaltene elektronische Vorrichtung (500) gemäß Anspruch 1, wobei das "ausführbarer Code"-Mittel (582) bei Ausführung durch den Prozessor (504) den Motor (538) weiter steuert, um das Kameramodul (524) und somit die Sichtlinie (124, 126, 128, 530, 532) um die Rotationsachse (526) zu rotieren, wenn sich die Ausrichtung (548) ändert, um den bestimmten Winkel (550) zwischen der Sichtlinie (124, 126, 128, 530, 532) und der Richtung der Schwerkraft (546) zu halten.

3. Handgehaltene elektronische Vorrichtung (500) gemäß Anspruch 1 oder 2, die weiter aufweist:
ein Benutzer-Eingabeelement (510, 512, 514, 516, 520), das mit dem Prozessor (504) verbunden ist,
wobei das "ausführbarer Code"-Mittel (582), bei Ausführung durch den Prozessor (504), den bestimmten Winkel (550) als eine Funktion einer Eingabe setzt, die an dem Benutzer-Eingabeelement (510, 512, 514, 516, 520) empfangen wird.

4. Handgehaltene elektronische Vorrichtung (500) gemäß Anspruch 1 oder 2, wobei eine Anzeige des bestimmten Winkels (578) in dem Speicher (506) vorprogrammiert ist.

5. Handgehaltene elektronische Vorrichtung (500) gemäß Anspruch 1 oder Anspruch 2, die weiter aufweist:
ein Benutzer-Eingabeelement (510, 512, 514, 516, 520), das mit dem Prozessor (504) verbunden ist,
wobei der Speicher eine Vielzahl von Anzeigen von Winkeln (578) zwischen der Sichtlinie (124, 126, 128, 530, 532) und der Richtung der Schwerkraft (546) speichern kann, und
wobei das "ausführbarer Code"-Mittel (582), bei Ausführung durch den Prozessor (504), den bestimmten Winkel (550) aus der Vielzahl auswählt als eine Funktion einer Eingabe, die an dem Benutzer-Eingabeelement (510, 512, 514, 516, 520) empfangen wird.

6. Handgehaltene elektronische Vorrichtung (500) gemäß Anspruch 1 oder Anspruch 2, wobei eine Vielzahl von Anzeigen von Winkeln (578) zwischen der Sichtlinie (124, 126, 128, 530, 532) und der Richtung der Schwerkraft (546) in dem Speicher (506) vorprogrammiert sind, und wobei das "ausführbarer Code"-Mittel (582), bei Ausführung durch den Prozessor (504), den bestimmten Winkel aus der Vielzahl nach vordefinierten Kriterien auswählt.

7. Verfahren, das in einer handgehaltenen elektronischen Vorrichtung (500) durchgeführt wird, wobei das Verfahren aufweist:
Anzeigen in einer Anzeige (508) der handgehaltenen elektronischen Vorrichtung (500) eines Bilds (400), das durch einen Bildsensor (528) erfasst wird, der in einem Kameramodul (524) eingebettet ist, wobei das Bild (400) in einem Sichtfeld erfasst wird, das um eine Sichtlinie (124, 126, 128, 530, 532) zentriert ist;
Erfassen einer Ausrichtung (548) eines Gehäuses (502) der handgehaltenen elektronischen Vorrichtung (500) relativ zu einer Richtung der Schwerkraft (546), wobei das Kameramodul (524) mit dem Gehäuse (502) physikalisch verbunden ist und rotierbar ist relativ zu dem Gehäuse (502) um eine Rotationsachse (526) des Kameramoduls (524); Erfassen eines Rotationswinkels (534), relativ zu einer Referenzachse (536), des Kameramoduls (524) und somit der Sichtlinie (124, 126, 128, 530, 532) um die Rotationsachse (526) des Kameramoduls (524), wobei die Sichtlinie (124, 126, 128, 530, 532) senkrecht ist zu der Rotationsachse (526); und
Steuern eines Motors (538) der handgehaltenen elektronischen Vorrichtung (500), um das Kameramodul (524) und somit die Sichtlinie (124, 126, 128, 530, 532) um die Rotationsachse (526) zu rotieren, um einen bestimmten Winkel (550) zwischen der Sichtlinie (124, 126, 128, 530, 532) und der Richtung der Schwerkraft (546) zu erlangen und zu halten, basierend zumindest auf der Ausrichtung des Gehäuses relativ zu einer Richtung der Schwerkraft und dem Rotationswinkel des Kameramoduls.

8. Verfahren gemäß Anspruch 7, das weiter aufweist:
Steuern des Motors (538) zum Rotieren des Kameramoduls (524) und somit der Sichtlinie (124, 126, 128, 530, 532) um die Rotationsachse (526), wenn sich die Ausrichtung (548) ändert, um den bestimmten Winkel (550) zwischen der Sichtlinie (124, 126, 128, 530, 532) und der Richtung der Schwerkraft (546) zu halten.

9. Verfahren gemäß Anspruch 7 oder Anspruch 8, das weiter aufweist:
Empfangen einer Eingabe an einem Benutzer-Eingabeelement (510, 512, 514, 516, 520) der handgehaltenen elektronischen Vorrichtung (500) und Setzen des bestimmten Winkels (550) als eine Funktion der Eingabe; oder Vorprogrammieren (578) des bestimmten Winkels (550) in die handgehaltene elektronische Vorrichtung (500).

10. Verfahren gemäß Anspruch 7 oder Anspruch 8, das weiter aufweist:
Speichern einer Vielzahl von Anzeigen von Winkeln (578) zwischen der Sichtlinie (124, 126, 128, 530, 532) und der Richtung der Schwerkraft (546) in der handgehaltenen elektronischen Vorrichtung (500); und Empfangen einer Eingabe an einem Benutzer-Eingabeelement (510, 512, 514, 516, 520) der handgehaltenen elektronischen Vorrichtung (500) und Setzen des bestimmten Winkels (550) aus der Vielzahl demgemäß als eine Funktion der Eingabe.

11. Verfahren gemäß Anspruch 7 oder Anspruch 8, das weiter aufweist:
Vorprogrammieren einer Vielzahl von Anzeigen von Winkeln (578) zwischen der Sichtlinie (124, 126, 128, 530, 532) und der Richtung der Schwerkraft (546) in die handgehaltene elektronische Vorrichtung (500); und
Auswählen des bestimmten Winkels (550) aus der Vielzahl gemäß vordefinierten Kriterien.

12. Computerlesbares Speichermedium (506), das "ausführbarer Code"-Mittel (582) darin aufgenommen aufweist zur Ausführung durch einen Prozessor (504) einer handgehaltenen elektronischen Vorrichtung (500), wobei das "ausführbarer Code"-Mittel (582) ausführbar ist, um die handgehaltene elektronische Vorrichtung (500) zu veranlassen, die Schritte des Verfahrens gemäß einem der Ansprüche 7 bis 11 zu implementieren.

## Revendications

1. Dispositif électronique portatif (500), comprenant :
un boîtier (502) ;
un processeur (504) logé dans le boîtier (502) ;
un module de dispositif de prise de vue (524) couplé physiquement au boîtier (502), le module de dispositif de prise de vue (524) pouvant pivoter, par rapport au boîtier (502), autour d'un axe de rotation (526) du module de dispositif de prise de vue (524) ;
un capteur d'images (122, 528) intégré dans le module de dispositif de prise de vue (524) afin de détecter une image dans un champ de vision qui est centré autour d'une ligne de vue (124, 126, 128, 530, 532), la ligne de vue étant perpendiculaire à l'axe de rotation (526) ; et
un écran d'affichage (508) commandé par le processeur (504) afin d'afficher l'image (400) ; un moteur (538) couplé au boîtier (502) et au module de dispositif de prise de vue (524), le moteur (538) pouvant être commandé par le processeur (504) afin de faire tourner le module de dispositif de prise de vue (524) et donc la ligne de vue (124, 126, 128, 530, 532) autour de l'axe de rotation (526), par rapport au boîtier (502) ;
un capteur d'inclinaison (541) couplé au processeur (504) pour détecter une orientation (548) du boîtier (502) par rapport à la direction de la gravité (546) ;
un indicateur d'angle (540) couplé au processeur (504) pour détecter un angle de rotation (534) du module de dispositif de prise de vue (524) et donc de la ligne de vue (124, 126, 128, 530, 532) autour de l'axe de rotation (526) par rapport à un axe de référence (536) qui est perpendiculaire à l'axe de rotation (526) ; et
une mémoire (506) en mesure de stocker un moyen de code exécutable (582) qui, lorsqu'il est exécuté par le processeur (504), commande le moteur (538) afin de faire tourner le module de dispositif de prise de vue (524) et donc la ligne de vue (124, 126, 128, 530, 532) autour de l'axe de rotation (526) afin d'obtenir et de maintenir un angle particulier (550) entre la ligne de vue (124, 126, 128, 530, 532) et la direction de la gravité (546), sur la base d'informations fournies par le capteur d'inclinaison et l'indicateur d'angle.

2. Dispositif électronique portatif (500) selon la revendication 1, dans lequel le moyen de code exécutable (582), lorsqu'il est exécuté par le processeur (504), commande en outre le moteur (538) afin de faire tourner le module de dispositif de prise de vue (524) et donc la ligne de vue (124, 126, 128, 530, 532) autour de l'axe de rotation (526) lorsque l'orientation (548) change, afin de maintenir l'angle particulier (550) entre la ligne de vue (124, 126, 128, 530, 532) et la direction de la gravité (546).

3. Dispositif électronique portatif (500) selon la revendication 1 ou la revendication 2, comprenant en outre :
un élément d'entrée par l'utilisateur (510, 512, 514, 516, 520), couplé au processeur (504) ;
le moyen de code exécutable (582), lorsqu'il est exécuté par le processeur (504), réglant l'angle particulier (550) en fonction d'une entrée reçue sur l'élément d'entrée par l'utilisateur (510, 512, 514, 516, 520).

4. Dispositif électronique portatif (500) selon la revendication 1 ou la revendication 2, dans lequel une indication de l'angle particulier (578) est préprogrammée dans la mémoire (506).

5. Dispositif électronique portatif (500) selon la revendication 1 ou la revendication 2, comprenant en outre :
un élément d'entrée par l'utilisateur (510, 512, 514, 516, 520), couplé au processeur (504) ;
la mémoire étant en mesure de stocker une pluralité d'indications d'angles (578) entre la ligne de vue (124, 126, 128, 530, 532) et la direction de la gravité (546) ; et
le moyen de code exécutable (582), lorsqu'il est exécuté par le processeur (504), sélectionnant l'angle particulier (550) parmi la pluralité, en fonction de l'entrée reçue sur l'élément d'entrée par l'utilisateur (510, 512, 514, 516, 520).

6. Dispositif électronique portatif (500) selon la revendication 1 ou la revendication 2, dans lequel une pluralité d'indications d'angles (578) entre la ligne de vue (124, 126, 128, 530, 532) et la direction de la gravité (546) est préprogrammée dans la mémoire (506) et dans lequel le moyen de code exécutable (582), lorsqu'il est exécuté par le processeur (504), sélectionne l'angle particulier dans la pluralité en fonction de critères prédéfinis.

7. Procédé exécuté dans un dispositif électronique portatif (500), le procédé comprenant les étapes consistant à :
afficher sur un écran d'affichage (508) du dispositif électronique portatif (500) une image (400) détectée par un capteur d'images (528) intégré dans un module de dispositif de prise de vue (524), l'image (400) étant détectée dans un champ de vision qui est centré autour d'une ligne de vue (124, 126, 128, 530, 532) ;
détecter une orientation (548) d'un boîtier (502) du dispositif électronique portatif (500) par rapport à la direction de la gravité (546), le module de dispositif de prise de vue (524) étant couplé physiquement au boîtier (502) et pouvant tourner par rapport au boîtier (502) autour d'un axe de rotation (526) du module de dispositif de prise de vue (524) ;
détecter un angle de rotation (534), par rapport à un axe de référence (536), du module de dispositif de prise de vue (524) et donc de la ligne de vue (124, 126, 128, 530, 532) autour de l'axe de rotation (526) du module de dispositif de prise de vue (524), la ligne de vue (124, 126, 128, 530, 532) étant perpendiculaire à l'axe de rotation (526) ; et
commander un moteur (538) du dispositif électronique portatif (500) afin de faire tourner le module de dispositif de prise de vue (524) et donc la ligne de vue (124, 126, 128, 530, 532) autour de l'axe de rotation (526) afin d'obtenir et de maintenir un angle particulier (550) entre la ligne de vue (124, 126, 128, 530, 532) et la direction de la gravité (546), sur la base au moins de l'orientation du boîtier par rapport à la direction de la gravité et de l'angle de rotation du module de dispositif de prise de vue.

8. Procédé selon la revendication 7, comprenant en outre l'étape consistant à :
commander le moteur (538) pour faire tourner le module de dispositif de prise de vue (524) et donc la ligne de vue (124, 126, 128, 530, 532) autour de l'axe de rotation (526) lorsque l'orientation (548) change, afin de maintenir l'angle particulier (550) entre la ligne de vue (124, 126, 128, 530, 532) et la direction de la gravité (546).

9. Procédé selon la revendication 7 ou la revendication 8, comprenant en outre les étapes consistant à :
recevoir une entrée sur un élément d'entrée par l'utilisateur (510, 512, 514, 516, 520) du dispositif électronique portatif (500) et régler l'angle particulier (550) en fonction de l'entrée ; ou
préprogrammer (578) l'angle particulier (550) sur le dispositif électronique portatif (500).

10. Procédé selon la revendication 7 ou la revendication 8, comprenant en outre les étapes consistant à :
stocker une pluralité d'indications d'angles (578) entre la ligne de vue (124, 126, 128, 530, 532) et la direction de la gravité (546) dans le dispositif électronique portatif (500) ; et
recevoir une entrée sur l'élément d'entrée par l'utilisateur (510, 512, 514, 516, 520) du dispositif électronique portatif (500) et régler l'angle particulier (550) parmi la pluralité en fonction de l'entrée.

11. Procédé selon la revendication 7 ou la revendication 8, comprenant en outre les étapes consistant à :
préprogrammer une pluralité d'indications d'angles (578) entre la ligne de vue (124, 126, 128, 530, 532) et la direction de la gravité (546) sur le dispositif électronique portatif (500) ; et
sélectionner l'angle particulier (550) parmi la pluralité en fonction de critères prédéfinis.

12. Support de stockage lisible par ordinateur (506), comprenant un moyen de code exécutable (582) qui y est matérialisé afin d'être exécuté par un processeur (504) d'un dispositif électronique portatif (500), le moyen de code exécutable (582) pouvant être exécuté pour commander au dispositif électronique portatif (500) de mettre en oeuvre les étapes du procédé selon l'une quelconque des revendications 7 à 11.
